# EUROPEAN PATENT APPLICATION

(11) **EP 4 672 446 A1**
(43) Date of publication of application: **31.12.2025**
(21) Application number: 25183513.8
(22) Date of filing: 18.06.2025
(51) Int. Cl.: H01M 50/152, H01M 10/04, H01M 50/342, H01M 50/474

(54) **CAP ASSEMBLY, SECONDARY BATTERY, AND SECONDARY BATTERY INSPECTION DEVICE**

(30) Priority: 28.06.2024 KR 20240085439
(71) Applicant: SAMSUNG SDI CO., LTD., Yongin-si, Gyeonggi-do 17084 (KR)
(72) Inventor: MOON, Sang Hyup, 16678 Suwon-si, Gyeonggi-do (KR); PARK, Keun Woo, 16678 Suwon-si, Gyeonggi-do (KR)
(74) Representative: Gulde & Partner

(57) **Abstract**

A cap assembly (200), a secondary battery (100) including the cap assembly (200), and a secondary battery inspection device (300) for inspecting the secondary battery (100) are disclosed. A cap assembly (200) includes a cap down (230), a vent (220) located on a surface of the cap down (230), and a mark (260) located on another surface of the cap down (230).

## Description

### BACKGROUND

### 1. Field

The present disclosure relates to a cap assembly, a secondary battery including the cap assembly, and an inspection device for inspecting the secondary battery.

### 2. Description of the Related Art

Unlike primary batteries that cannot be recharged, secondary batteries are batteries that can be charged and discharged. Low-capacity secondary batteries may be used in small, portable electronic devices, such as smartphones, feature phones, notebook computers, digital cameras, and camcorders, and large-capacity secondary batteries are widely used as motor driving power sources and power storage batteries, such as in hybrid vehicles, electric vehicles, etc.

The secondary battery may include an electrode including a positive and/or negative electrode, an electrode assembly including the electrode, a case accommodating the electrode assembly, and a cap assembly coupled to an opening of the case to seal the case.

The cap assembly may include a vent, a cap down (e.g., an element like a plate of a cap assembly that faces "down" to the electrode assembly), and an insulator located between the vent and the cap down and insulating the vent and the cap down. The cap assembly may be manufactured, for example, by assembly of the vent, the cap down, and the insulator.

In this case, the cap assembly has a problem that the case cannot be sealed properly if each component is not properly assembled. For example, if the assembly of each component becomes loose, or cracks occur in the vent, cap down, or the like during the assembly process, the reliability and safety of the secondary battery are reduced.

The above-described information disclosed in the art is provided to improve understanding of the background of the present invention and may therefore include information that does not constitute the related art.

### SUMMARY

According to an aspect of embodiments of the present invention, a cap assembly and/or a secondary battery including a guide to easily inspect a crack formed inside is provided. According to an aspect of embodiments of the present invention, a cap assembly capable of performing a non-destructive full inspection is provided.

According to another aspect of embodiments of the present invention, a secondary battery inspection device that inspects a crack formed in a cap assembly and/or a secondary battery is provided.

However, aspects and technical problems to be solved by the present invention are not limited to the aspects and problems to be solved described above, and other aspects and problems to be solved not mentioned can be clearly understood by those skilled in the art from the description of the invention provided below.

According to one or more embodiments of the present invention, a cap assembly includes: a cap down; a vent located on a surface of the cap down; and a mark located on another surface of the cap down. The surface and the another surface may both be different surface portions of a common side of the cap down.

The cap assembly may comprise a sub mark located on a surface of the vent.

The sub mark may be located on a surface of the vent facing the cap down.

The sub mark may be located so as to be connected to the mark.

The sub mark may be connected to the mark to form an "I" shape (e.g., a shape that is essentially linear).

The sub mark may be located to be alternately arranged with the mark.

The mark may include an intaglio on the another surface of the cap down. "Intaglio" may refer to a family of printmaking techniques in which an image, sign or mark is incised or cut into a surface, rather than standing in relief.

### The intaglio may be formed by a laser

The intaglio may be formed by a punch.

The mark may include a paint printed on the another surface of the cap down.

The mark may include an adhesive tape.

The adhesive tape may connect a surface of the vent with the another surface of the cap down.

According to one or more embodiments of the present invention, a secondary battery includes: a case in which an electrode assembly is accommodated; and a cap assembly coupled to an opening of the case to seal the case, wherein the cap assembly includes a cap down; a vent located on a surface of the cap down; and a mark located on another surface of the cap down.

According to one or more embodiments of the present invention, a secondary battery inspection device includes: a vision camera configured to acquire an image of a cap assembly which includes a cap down; a vent located on a surface of the cap down; and a mark located on another surface of the cap down; and a processor configured to extract the mark from the image and inspect the cap assembly using the extracted mark.

The secondary battery inspection device may further include a mark inspection part configured to inspect whether the mark is formed at a certain position.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The following drawings attached to the present specification illustrate some example embodiments of the present disclosure and further describe aspects and features of the present disclosure together with the detailed description of the present disclosure. However, the present disclosure is not to be construed as being limited to the drawings, in which:
FIG. 1 is a cross-sectional view schematically illustrating a cylindrical secondary battery according to an embodiment of the present invention;
FIG. 2 is a cross-sectional view schematically illustrating a cap assembly according to an embodiment of the present invention;
FIG. 3 is a diagram schematically illustrating a lower surface of the cap assembly according to an embodiment of the present invention;
FIG. 4 is a diagram schematically illustrating a lower surface of the cap assembly according to an embodiment of the present invention;
FIG. 5 is a diagram schematically illustrating a lower surface of the cap assembly according to an embodiment of the present invention;
FIG. 6 is a diagram schematically illustrating a lower surface of the cap assembly according to an embodiment of the present invention; and
FIG. 7 is a block diagram illustrating components of a secondary battery inspection device according to an embodiment of the present invention.

### DETAILED DESCRIPTION

Herein, some example embodiments of the present invention will be described in further detail with reference to the attached drawings. Terms or words used in this specification and claims are not to be interpreted to be limited to ordinary or dictionary meanings and are to be interpreted as having meanings and concepts consistent with the technical idea of this invention based on the principle that the inventor can properly define the concept of the term in order to describe his or her invention in the best way. Accordingly, it is to be understood that the embodiments described herein, and the configurations illustrated in the drawings are only some example embodiments of the invention and do not necessarily represent all of the technical ideas of the invention, and that there may be various equivalents and modifications that may replace them at the time of filing.

Further, when used herein, the terms "comprise" or "include" and/or "comprising" or "including" specify the presence of the mentioned shapes, numbers, steps, operations, members, elements, and/or groups thereof, and are not intended to exclude the presence or addition of one or more other shapes, numbers, operations, members, elements, and/or groups thereof.

In addition, for clarity of understand the invention, the attached drawings may not be drawn to actual scale, and the dimensions of some components may be exaggerated. In addition, the same reference numbers may be assigned to the same components in different embodiments.

The statement that two objects for comparison are "the same" or "equal" may mean the same or substantially the same. Therefore, substantially the same may include deviations that are considered low in the art, for example, deviations of less than 5%. Additionally, uniformity of a parameter over a given region may imply uniformity from an average perspective.

Although "first," "second," and the like may be used to describe various components, the components are not limited by these terms. These terms are used to distinguish one component from another, and unless otherwise specifically stated, it is to be understood that a first component may also be a second component.

Throughout the specification, unless otherwise specifically stated, each element may be singular or plural.

When any component is disposed "on (or under)" a component or "above (or below)" a component, it may mean not only that any component is disposed in contact with the component, but also that another component may be interposed between the component and any component disposed on (or under) the component.

Also, when one component is described as being "linked," "coupled," or "connected" to another component, it is to be understood that the components may be directly connected or coupled to each other, but that another component may be "interposed" between the components, or that each component may be "linked," "coupled," or "connected" through another component. Also, when a part is electrically connected to another part, this includes not only direct connections, but also connections with another element therebetween.

Throughout the specification, "A and/or B" means A, B, or A and B unless otherwise stated to the contrary. That is, "and/or" includes any or all combinations of a plurality of the listed items. When "C to D" is stated, it means greater than or equal to C and less than or equal to D unless otherwise specifically stated.

The terms used herein are intended to describe embodiments of the present disclosure and are not intended to limit the present disclosure.

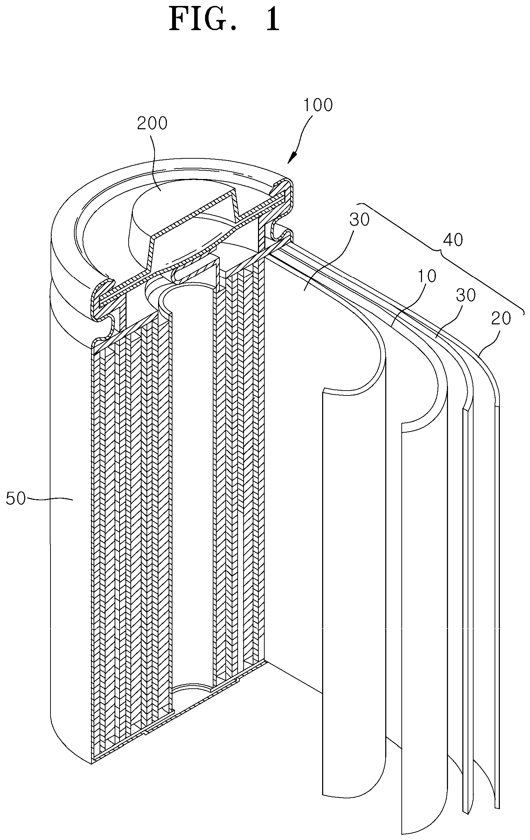

FIG. 1 is a cross-sectional view schematically illustrating a cylindrical secondary battery according to an embodiment of the present invention.

As illustrated in FIG. 1, a cylindrical lithium-ion secondary battery 100 according to an embodiment of the present invention may include a cylindrical case 50, an electrode assembly 40, and a cap assembly 200. In addition, the cylindrical lithium-ion secondary battery 100 may further include, in one or more embodiments, a center pin (not shown). Additionally, in the secondary battery 100 according to one or more embodiments of the present disclosure, the cap assembly 200 also performs a current interrupt operation and, therefore, the cap assembly 200 may also be referred to as a current interrupt device.

The cylindrical case 50 may include a generally circular bottom portion and a cylindrical side wall extending by a length (e.g., a preset length) in an upper direction from the circumference of the bottom portion. During the manufacturing process of the secondary battery, the upper portion of the cylindrical case 50 is open. Therefore, during the assembly process of the secondary battery, the electrode assembly 40 and the center pin may be inserted into the cylindrical case 50 along with an electrolyte. The cylindrical case 50 may be made of, for example, but is not limited thereto, steel, stainless steel, aluminum, an aluminum alloy, or an equivalent thereof.

The electrode assembly 40 may be accommodated inside the cylindrical case 50. The electrode assembly 40 may include a negative electrode 20 in which a negative active material (e.g., graphite, carbon, etc.) is coated on a negative current collector plate, a positive electrode 10 in which a positive active material (e.g., transition metal oxide (LiCoO₂, LiNiO₂, LiMn₂O₄, etc.)) is coated on a positive current collector plate, and a separator 30 located between the negative electrode 20 and the positive electrode 10 to prevent or substantially prevent a short circuit and allow the movement of lithium ions. In an embodiment, the negative electrode 20, the positive electrode 10, and the separator 30 may be wound in a generally cylindrical shape.

In an embodiment, the cap assembly 200 includes a cap up. The cap assembly 200 may further include at least one of a cap down, a vent, and an insulator. The cap assembly 200 is coupled to an opening of the case 50 such that the electrode assembly 40 is sealed inside the case 50.

However, the present invention is not limited thereto, and the case may be configured in any of various shapes, such as a circular shape, a pouch type, or the like. In addition, the case may be made of a metal, such as aluminum, an aluminum alloy, nickel-plated steel, etc. or a laminated film or a plastic constituting a pouch.

As described above, the electrode assembly 40 includes the negative electrode 20, the positive electrode 10, and the separator 30 located between the negative electrode 20 and the positive electrode 10. Additionally, the electrode assembly 40 is accommodated in the cylindrical case 50 along with the electrolyte (not shown). Herein, the electrode assembly 40 and the electrolyte are described.

### Positive Electrode 10

As the positive electrode active material, a compound capable of reversible intercalation and deintercalation of lithium (lithiated intercalation compound) may be used. In an embodiment, at least one of composite oxides of a metal selected from cobalt, manganese, nickel, and a combination thereof and lithium may be used as the positive electrode active material.

The composite oxide may be a lithium transition metal composite oxide, and examples include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any of the following chemical formulas may be used. LiₐA_{1-b}X_{b}O_{2-c}D_{c}(0.90≤a≤.1.8, 0≤b≤0.5, 0≤c≤0.05); LiₐMn_{2-b}X_{b}O_{4-c}O_{c}(0.90≤a≤1.8, 0≤b≤0.5, 0≤c≤0.05); LiₐNi_{1-b-c}CO_{b}X_{c}O_{2-α}D_{α}(0.90≤a≤1.8, 0≤b≤0.5, 0≤c≤0.5, 0<a<2); LiₐNi_{1-b-c}Mn_{b}X,O_{2-α}D_{α}(0.90≤a≤1.8, 0≤b≤0.5, 0≤c≤0.5, 0<a<2); LiₐNi_{b}Co_{c}L¹_{d}GₑO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂0.90≤a≤1.8, 0.001≤b≤0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li _{(3-f)}Fe₂(PO₄)₃(0≤f≤2); LiₐFePO₄(0.90≤a≤1.8).

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; L1 is Mn, Al, or a combination thereof.

The positive electrode 10 for a lithium secondary battery may include a current collector and a positive electrode active material layer formed on the current collector. The positive electrode active material layer may include the positive electrode active material, and may further include a binder and/or a conductive material.

In an embodiment, a content of the positive electrode active material may be in a range from 90 wt% to 99.5 wt% based on 100 wt% of the positive electrode active material layer, and the contents of the binder and conductive material may each be in a range from 0.5 wt% to 5 wt% based on 100 wt% of the positive electrode active material layer.

In an embodiment, Al may be used as the current collector, but embodiments are not limited thereto.

### Negative Electrode 20

The negative electrode active material includes a material capable of reversibly intercalating/deintercalating lithium ions, lithium metal, an alloy of lithium and a metal, a material capable of doping and dedoping lithium, or a transition metal oxide.

The material capable of reversibly intercalating/deintercalating lithium ions may be a carbon-based negative electrode active material, such as crystalline carbon, amorphous carbon, or a combination thereof. Examples of the crystalline carbon may include graphite, such as natural graphite or artificial graphite, and examples of the amorphous carbon may include soft carbon or hard carbon, mesophase pitch carbide, calcined coke, and the like.

As the material capable of doping and dedoping lithium, a Si-based negative electrode active material or a Sn-based negative electrode active material may be used. The Si-based negative electrode active material may be silicon, a silicon-carbon composite, SiOₓ (0 < x ≤ 2), a Si-based alloy, or a combination thereof.

The silicon-carbon composite may be a composite of silicon and amorphous carbon. According to an embodiment, the silicon-carbon composite may be in a form of silicon particles and amorphous carbon coated on surfaces of the silicon particles.

The silicon-carbon composite may further include crystalline carbon. For example, the silicon-carbon composite may include a core including crystalline carbon and silicon particles and an amorphous carbon coating layer located on a surface of the core.

The negative electrode 20 for the lithium secondary battery 100 includes a current collector, and a negative electrode active material layer located on the collector. The negative electrode active material layer may include the negative electrode active material and may further include a binder and/or a conductive material.

In an embodiment, for example, the negative electrode active material layer may include 90 wt% to 99 wt% of the negative electrode active material, 0.5 wt% to 5 wt% of the binder, and 0 wt% to 5 wt% of the conductive material.

As the binder, a non-aqueous binder, an aqueous binder, a dry binder, or a combination thereof may be used. If the aqueous binder is used as the negative electrode binder, a cellulose-based compound capable of imparting viscosity may be further included.

As the negative electrode current collector, one or more selected from copper foil, nickel foil, stainless steel foil, titanium foil, nickel foam, copper foam, a polymer substrate coated with a conductive metal, and a combination thereof may be used.

The electrolyte for the lithium secondary battery 100 includes a non-aqueous organic solvent and a lithium salt.

The non-aqueous organic solvent functions as a medium through which ions involved in the electrochemical reactions of the battery may move.

The non-aqueous organic solvent may be a carbonate-based, ester-based, ether-based, ketone-based, or alcohol-based solvent, an aprotic solvent, or a combination thereof, and may be used alone or in a combination of two or more types.

In addition, if using the carbonate-based solvent, a mixture of a cyclic carbonate and a chain carbonate may be used.

### Separator 30

Depending on the type of lithium secondary battery 100, the separator 30 may be present between the positive electrode 10 and the negative electrode 20. Polyethylene, polypropylene, polyvinylidene fluoride, or a multilayer film having two or more layers thereof may be used as the separator 30.

The separator 30 may include a porous substrate and a coating layer including an organic material, an inorganic material, or a combination thereof located on one surface or opposite surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and inorganic material may be present as a mixture in one coating layer, or may be present in the form in which a coating layer including an organic material and a coating layer including an inorganic material are stacked.

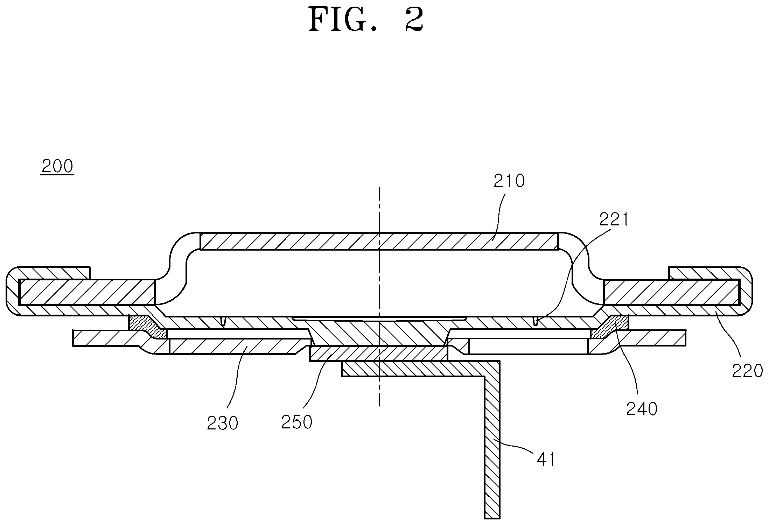

FIG. 2 is a cross-sectional view schematically illustrating a cap assembly according to an embodiment of the present invention.

In FIG. 2, "200" represents a cap assembly according to an embodiment of the present invention.

The cap assembly 200 is coupled to the opening of the case 50. For example, if the opening of the case 50 is provided at an upper portion of the case 50, the cap assembly 200 is coupled to an upper portion of the case 50. For example, if the opening of the case 50 is provided at a lower portion of the case 50, the cap assembly 200 is coupled to a lower portion of the case 50.

The cap assembly 200 seals the inside of the case 50. As shown in FIG. 1, the secondary battery 100 includes the electrode assembly 40 and the electrolyte (not shown) that are accommodated inside the case 50. The cap assembly 200 allows the electrode assembly 40 and the electrolyte to be safely accommodated inside the case 50.

In addition, the cap assembly 200 prevents or substantially prevents heat from propagating to adjacent secondary batteries, and/or prevents or substantially prevents the secondary battery 100 from exploding. In an embodiment, the cap assembly 200 is electrically connected to an electrode extending from the electrode assembly 40 (e.g., the positive electrode 10 and/or negative electrode 20 shown in FIG. 1). The cap assembly 200 allows the electrode to be electrically connected to the outside such that the secondary battery 100 may receive current from the outside or supply current.

In an embodiment, the cap assembly 200 includes a cap down 230 and a vent 220 located on a surface of the cap down 230.

In addition, the cap assembly 200 may further include a cap up 210 provided in an opposite direction to the cap down 230 based on the vent 220. In addition, the cap assembly 200 may further include an insulator 240 provided between the vent 220 and the cap down 230. In an embodiment, the cap assembly 200 may further include a sub plate 250 connecting the cap assembly 200 and the electrode assembly 40.

Herein, each component of the cap assembly 200 is described with reference to an example in which the cap assembly 200 is coupled to an opening formed at the upper portion of the case 50.

In an embodiment, the cap up 210 may be located at the uppermost side of the cap assembly 200. In an embodiment, the cap up 210 is formed to protrude convexly upward. The cap up 210 includes a terminal portion for connecting an external circuit in the protruding portion. The cap up 210 may further include one or more outlets for discharging gas around the terminal portion.

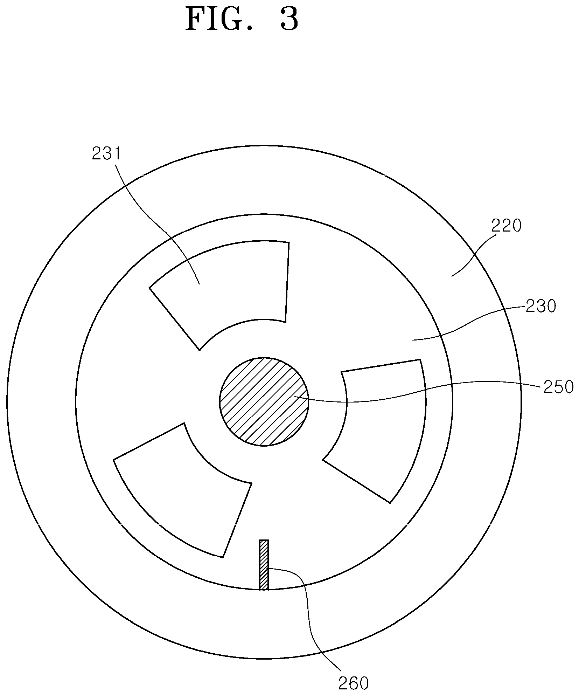

The cap down 230 is located under the cap up 210. The cap down 230 may have one or more holes 231 formed in at least a portion thereof (see FIG. 3).

The vent 220 is located between the cap up 210 and the cap down 230. In an embodiment, the vent 220 may be formed to be convex downward. In an embodiment, the vent 220 includes at least one notch 221. The notch 221 may be located, for example, in at least a portion of a region that is formed to be convex downward in the vent 220. The vent 220 may discharge gas formed inside the secondary battery 100 to the outside of the case 50 through the notch 221.

For example, if the secondary battery 100 is overcharged and/or the secondary battery 100 operates abnormally, gas may be generated inside the secondary battery 100. In this case, a pressure inside the case 50 is increased by the gas. If the pressure inside the secondary battery 100 increases, the vent 220 may be deformed such that the region formed to be convex downward faces upward due to the pressure. Accordingly, the vent 220 may be electrically disconnected from the electrode assembly 40. In an embodiment, the vent 220 may be cut along the notch 221. If the vent 220 is cut, the gas inside the case 50 is discharged to the outside of the case 50. Accordingly, the cap assembly 200 may prevent or substantially prevent the secondary battery 100 from exploding.

The insulator 240 is located between the cap down 230 and the vent 220. In an embodiment, for example, the insulator 240 is located at an edge between the cap down 230 and the vent 220. For example, the insulator 240 may be formed in a ring shape surrounding the edge between the cap down 230 and the vent 220. Accordingly, the insulator 240 may form a gap between the cap down 230 and the vent 220.

The insulator 240 electrically insulates the cap down 230 and the vent 220. In an embodiment, for example, the insulator 240 may include a resin material, such as any of polyethylene (PE), polypropylene (PP), polyethylene terephthalate (PET), and the like.

In an embodiment, for example, the insulator 240 may melt if the temperature inside the case 50 rises. In this case, the gas generated inside the case 50 flows into the gap between the cap down 230 and the vent 220. The inflowing gas increases the pressure in the space between the cap down 230 and the vent 220, causing the vent 220 to rupture due to the pressure. The gas may be discharged to the outside through the ruptured vent 220. Thus, the gas generated inside the case 50 is discharged to the outside of the case 50.

The sub plate 250 is located on the lower side of the cap down 230. In an embodiment, the sub plate 250 may be fixed to a lower surface of the cap down 230 to block the hole 231 in the cap down 230. In an embodiment, the sub plate 250 may be fixed or electrically connected to the region which is formed to be convex downward in the vent 220.

The sub plate 250 is located on an upper portion of the electrode assembly 40. The sub plate 250 may be connected to a tab 41 extending from the electrode assembly 40. For example, the sub plate 250 may have a surface in contact with the vent 220 and/or the cap down 230 and another surface in contact with the tab 41. In an embodiment, the sub plate 250 may be joined to the tab 41 by welding. In this case, the tab 41 is electrically connected to each of the positive electrode 10 and/or negative electrode 20 shown in FIG. 1 and is formed by extending from each of the positive electrode 10 and/or negative electrode 20. For example, the tab 41 includes a positive electrode tab that is joined to a positive electrode plate of the positive electrode 10 and extends from the positive electrode plate toward the top of the electrode assembly 40 to be connected to the sub plate 250.

Through this configuration, the cap assembly 200 according to an embodiment of the present invention may prevent or substantially prevent the secondary battery 100 from exploding.

FIG. 3 is a diagram schematically illustrating a lower surface of the cap assembly according to an embodiment of the present invention.

In FIG. 3, "200" represents a cap assembly according to an embodiment of the present invention (e.g., including the cap assembly 200 described in FIGS. 1 and 2).

The cap assembly 200 includes the cap down 230, the vent 220 located on a surface of the cap down 230, and a mark 260 formed on another surface of the cap down 230. In an embodiment, the cap assembly 200 may further include the sub plate 250.

The vent 220 is located on a surface of the cap down 230. For example, the vent 220 is located on an upper surface of the cap down 230. For example, the vent 220 is located on an upper portion of the cap down 230 and is joined to the cap down 230. In an embodiment, as described in FIG. 2, the insulator 240 is located between the vent 220 and the cap down 230 such that the vent 220 and the cap down 230 may be tightly joined when the vent 220 and the cap down 230 are joined.

The sub plate 250 is located on another surface of the cap down 230. For example, the sub plate 250 is located on a lower surface of the cap down 230. In an embodiment, for example, the sub plate 250 may be located on a lower portion of the cap down 230 and may be joined to the vent 220 and the cap down 230 through welding. In an embodiment, the welding may include ultrasonic welding, but a type of welding is not limited thereto and may include laser welding or the like.

In this case, the cap assembly 200 may receive a physical external force or torque in a rotational direction. In this case, a crack may occur in a welded portion where the vent 220 and the cap down 230 and the sub plate 250 are welded. If a crack occurs between the sub plate 250 and the vent 220 and the cap down 230, a short circuit of the secondary battery 100 may occur. Particularly, even if the cap assembly very slightly rotates less than 5° due to torque, cracks may occur in the welded portion.

In the cap assembly 200 according to an embodiment, a short circuit may not occur at the welded portion because the vent 220 and the cap down 230 are in contact with the sub plate 250 even if a crack occurs. In this case, during an operation of testing the performance or safety of the secondary battery 100, the secondary battery 100 may conduct normal current and may be determined as a good product during an IR test. In this case, the reliability of the secondary battery 100 may decrease as the crack grows later.

For example, the cap assembly 200 according to an embodiment of the present invention includes the mark 260. Through the mark 260, the cap assembly 200 provides a guide for determining whether torque is applied between the vent 220 and the cap down 230. Accordingly, the cap assembly 200 provides a method for non-destructive full inspection in a finished product state.

In an embodiment, the mark 260 is formed on the another side of the cap down 230. For example, the mark 260 is formed on the lower surface of the cap down 230.

In an embodiment, as illustrated in FIGS. 2 and 3, when viewed from the upper surface or lower surface of the cap assembly 200, the vent 220 may be formed with a larger cross-sectional area than the cap down 230. Accordingly, when viewed from the upper surface of the cap assembly 200, the cap down 230 may not be visible because the cap down 230 is covered by the vent 220. In an embodiment, when viewed from the lower surface of the cap assembly 200, the vent 220 may appear to surround an outer surface of the cap down 230 and radially extend outward from the outer surface of the cap down 230. In this case, the lower surface of the cap assembly 200 is a side where the sub plate 250 is located in the cap assembly 200.

For example, when viewed from the lower surface of the cap assembly 200, the mark 260 may be formed at a boundary line of the vent 220 and the cap down 230. For example, as illustrated in FIG. 3, the mark 260 may be formed from the boundary line toward the inside of the cap down 230. In an embodiment, the mark 260 may be formed across the boundary line.

Although FIG. 3 illustrates an example in which the cap assembly 200 includes one mark 260, the cap assembly 200 may include one or more marks 260. In an embodiment, for example, when the cap assembly 200 includes a plurality of marks 260, the plurality of marks 260 may all be formed along the boundary line. In an embodiment, some of the plurality of marks 260 may be formed along the boundary line and the remaining portion of the plurality of marks 260 may be formed inside the another surface of the cap down 230. In an embodiment, all of the plurality of marks 260 may be formed inside the another surface of the cap down 230.

The mark 260 may include any form of identifying mark formed on the another side of the cap down 230 without limitations on length, shape, and/or size. In an embodiment, for example, the mark 260 may have a linear shape, as illustrated in FIG. 3. In an embodiment, for example, the mark 260 may be formed in the form of any of a circular shape, a polygonal shape, a corporate logo, an emblem, text, a symbol, or the like. In an embodiment, for example, the mark 260 may be formed to occupy an area of 1% or less of the total area of the cap down 230. In an embodiment, for example, the mark 260 may be formed to occupy an area of 50% or more of the total area of the cap down 230.

In an embodiment, the mark 260 may be formed on the another surface of the cap down 230 in a two-dimensional shape.

In an embodiment, for example, the mark 260 may be formed by printing on the another surface of the cap down 230. For example, the mark 260 may be formed by printing, applying, and/or coating a paint such as ink on the cap down 230.

In an embodiment, for example, the mark 260 may include a sticker attached to the cap down 230. In this case, the sticker may include any of forms that can be attached to the cap down 230 by forming an adhesive material on at least one side. For example, the adhesive material includes at least one selected from the group consisting of polyurethane, epoxy resin, and polyolefins.

In an embodiment, the mark 260 may be formed on the another surface of the cap down 230 in a three-dimensional shape.

In an embodiment, for example, the mark 260 includes an intaglio formed on the cap down 230. The intaglio may include a three-dimensional shape formed from the another surface of the cap down 230 toward the inside of the cap down 230. For example, the intaglio may be formed by a laser and/or a punch. For example, the intaglio may include any of various shapes, such as a polygonal column, a polygonal pyramid, a cylindrical column, a cone, etc. In an embodiment, the intaglio may be formed, for example, by etching. For example, the intaglio may include an irregular three-dimensional shape.

In an embodiment, for example, the mark 260 includes a relief formed on the cap down 230. The relief may include a three-dimensional shape formed from the another surface of the cap down 230 toward the outside of the cap down 230. For example, the relief may be formed by a laser. The relief may include any of various shapes, such as a polygonal column, a polygonal pyramid, a cylindrical column, a cone, etc. and may further include an irregular three-dimensional shape.

In this way, the cap assembly 200 according to an embodiment of the present invention provides a guide for determining whether torque is applied between the vent 220 and the cap down 230 through the mark 260. For example, if the mark 260 moves to a different position from the previously formed position, it may be seen that rotation occurred between the vent 220 and the cap down 230. If rotation occurs between the vent 220 and the cap down 230, a crack may occur in the welded portion even if the rotation corresponds to a small angle.

The cap assembly 200 provides a method for quickly and easily inspecting cracks that may not be determined by current conduction inspection through the mark 260. Herein, various embodiments of the mark 260 will be described.

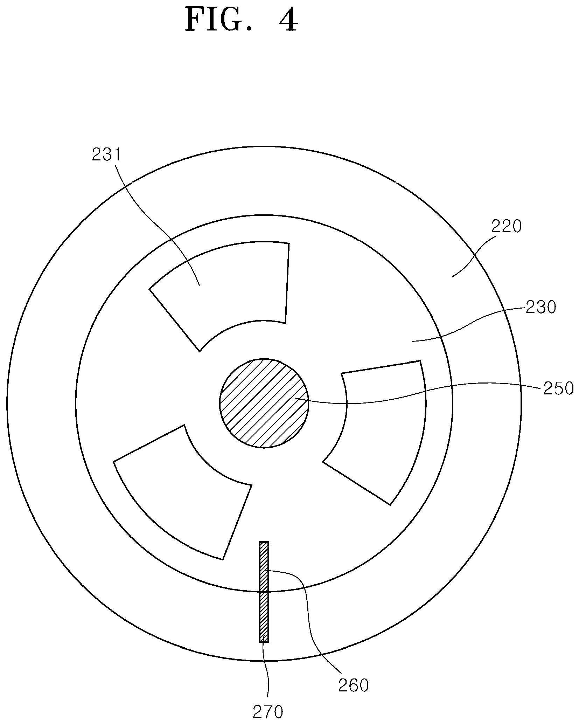

FIG. 4 is a diagram schematically illustrating a lower surface of the cap assembly according to an embodiment of the present invention.

In FIG. 4, "200" represents a cap assembly according to an embodiment of the present invention (e.g., including the cap assembly 200 described in FIGS. 1 to 3).

The cap assembly 200 may further include a sub mark 270 formed on a surface of the vent 220.

The sub mark 270 is formed on a surface of the vent 220. In this case, among both, or opposite, surfaces of the vent 220, the sub mark 270 is formed on a surface of the vent 220 that faces the cap down 230. For example, the surface of the vent 220 is a lower surface of the vent 220.

In an embodiment, for example, when viewed from the lower surface of the cap assembly 200, the sub mark 270 may be formed at the boundary line of the vent 220 and the cap down 230. For example, as illustrated in FIG. 4, the sub mark 270 may be formed from the boundary line toward the outer surface of the vent 220. In an embodiment, the sub mark 270 may be formed on the vent 220 to cross the boundary line.

Although FIG. 4 illustrates an example in which the cap assembly 200 includes one sub mark 270, the cap assembly 200 may include one or more sub marks 270.

The sub mark 270 may include any form of identifying mark formed on the another side of the cap down 230 without limitations on length, shape, and/or size.

In an embodiment, the sub mark 270 may be formed on the surface of the vent 220 in a two-dimensional shape.

In an embodiment, for example, the sub mark 270 may be formed by printing on the surface of the vent 220. For example, the sub mark 270 may be formed by printing, applying, and/or coating a paint such as ink on the vent 220.

In an embodiment, for example, the sub mark 270 includes a sticker attached to the vent 220. In this case, the sticker may include any of forms that can be attached to the vent 220 by forming an adhesive material on at least one side. In an embodiment, for example, the adhesive material includes at least one selected from the group consisting of polyurethane, epoxy resin, and polyolefins.

In an embodiment, the sub mark 270 may be formed on the surface of the vent 220 in a three-dimensional shape.

In an embodiment, for example, the sub mark 270 includes an intaglio formed on the vent 220. The intaglio includes a three-dimensional shape formed from the surface of the vent 220 toward the inside of the vent 220. For example, the intaglio may be formed by a laser and/or a punch. For example, the intaglio may include any of various shapes, such as a polygonal column, a polygonal pyramid, a cylindrical column, a cone, etc. In an embodiment, the intaglio may also be formed, for example, by etching. In an embodiment, for example, the intaglio includes an irregular three-dimensional shape.

In an embodiment, for example, the sub mark 270 includes a relief formed on the vent 220. The relief includes a three-dimensional shape formed from the surface of the vent 220 toward the outside of the vent 220. In an embodiment, for example, the relief may be formed by a laser. The relief may include any of various shapes, such as a polygonal column, a polygonal pyramid, a cylindrical column, a cone, etc., and, in an embodiment, includes an irregular three-dimensional shape.

In an embodiment, the sub mark 270 may be formed to correspond to the mark 260 based on the boundary line. For example, if the mark 260 is formed in a three-dimensional shape, the sub mark 270 may be formed in a three-dimensional shape. For example, if the mark 260 is formed in a straight-line shape, the sub mark 270 may be formed in a straight-line shape. In an embodiment, for example, the mark 260 and the sub mark 270 each include a three-dimensional intaglio formed through a laser and/or a mold.

In an embodiment, the sub mark 270 may be formed independently of the mark 260. For example, if the mark 260 is formed in a three-dimensional shape, the sub mark 270 may be formed in a two-dimensional shape. For example, if the mark 260 is formed in a straight-line shape, the sub mark 270 may be formed in a circular shape. In an embodiment, for example, the mark 260 may include a three-dimensional intaglio formed through a laser and/or a mold, and the sub mark 270 may include a two-dimensional printed material printed through paint.

In an embodiment, for example, the sub mark 270 is formed to be connected with the mark 260. In an embodiment, for example, the mark 260 may be in contact with the sub mark 270 at the boundary between the vent 220 and the cap down 230 when viewed from the lower surface of the cap assembly 200.

For example, as illustrated in FIG. 4, the mark 260 may be formed in a straight-line shape. In this case, one side of the mark 260 is in contact with the boundary line and another side of the mark 260 faces the inside of the cap down 230. In an embodiment, for example, as illustrated in FIG. 4, the sub mark 270 may be formed in a straight-line shape. In this case, a side of the sub mark 270 is in contact with the boundary line, and another side of the sub mark 270 faces the outer surface of the vent 220. In this case, a side of the mark 260 and a side of the sub mark 270 may be connected while in contact with each other at the boundary line. In this case, for example, the sub mark 270 may be connected to the mark 260 to form an I shape.

When the mark 260 and the sub mark 270 have a connected form, the cap assembly 200 may provide a guide that indicates whether rotation and/or a crack has occurred in the cap assembly 200 through the connection of the mark 260 and the sub mark 270. For example, if the vent 220 and the cap down 230 rotate relative to each other, the connection between the mark 260 and the sub mark 270 may be misaligned or broken.

The cap assembly 200 may provide a guide that indicates that torque is generated between the vent 220 and the cap down 230 and/or a crack is generated in the welded portion through the positional relationship of the mark 260 and the sub mark 270.

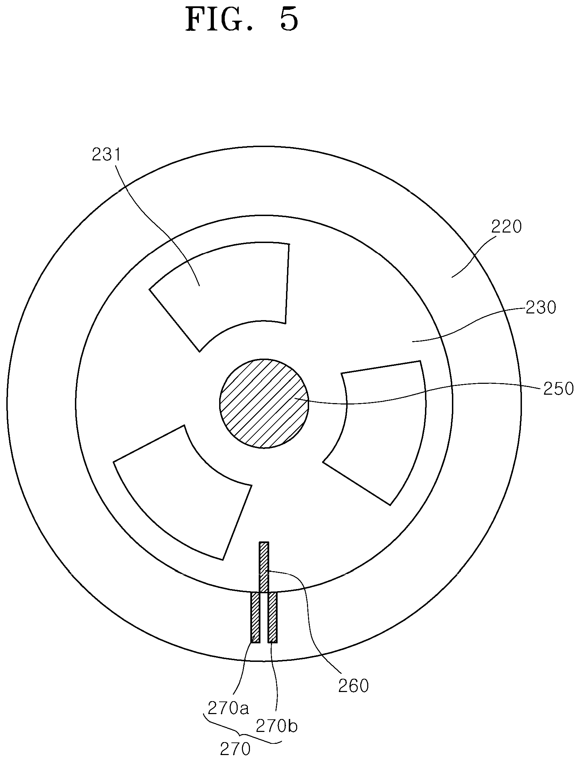

FIG. 5 is a diagram schematically illustrating a lower surface of the cap assembly according to an embodiment of the present invention.

In FIG. 5, "200" represents a cap assembly according to an embodiment of the present invention (e.g., including the cap assembly 200 described in FIGS. 1 to 3).

The cap assembly 200 may further include a sub mark 270 formed on a side of the vent 220.

The sub mark 270 is formed on a surface of the vent 220. In this case, among both, or opposite, surfaces of the vent 220, the surface of the vent 220 is a surface that faces the cap down 230. For example, the surface of the vent 220 is a lower surface of the vent 220.

Although FIG. 5 illustrates an example in which the cap assembly 200 includes two sub marks 270, the cap assembly 200 may also include one or three or more sub marks 270.

The sub mark 270 may include any form of identifying mark formed on the another side of the cap down 230 without limitations on length, shape, and/or size. In an embodiment, the sub mark 270 may be formed on the surface of the vent 220 in a two-dimensional shape. In an embodiment, the sub mark 270 may be formed on one surface of the vent 220 in a three-dimensional shape. A description of the shape of the sub mark 270 or a method of forming the sub mark 270 may be the same as or similar to that described in FIG. 4. Further, the description of the morphological association between the sub mark 270 and the mark 260 may be the same as or similar to that described in FIG. 4.

In an embodiment, for example, the sub mark 270 is formed by being arranged alternately with the mark 260. In this case, "arranged alternately" includes a state in which the sub mark 270 and the mark 260 are not connected to each other at the boundary line corresponding to the boundary between the vent 220 and the cap down 230 when viewed from the lower surface of the cap assembly 200.

In an embodiment, for example, the cap assembly 200 includes one mark 260 and one sub mark 270. For example, the sub mark 270 and the mark 260 may be formed such that a side of the sub mark 270 and a side of the mark 260 are in contact with the boundary line. In an embodiment, a side of the sub mark 270 and a side of the mark 260 may not be connected at the boundary line, but may be disposed adjacent to each other at the boundary line. That is, a portion of a side of the sub mark 270 and a portion of a side of the mark 260 may meet each other diagonally.

In an embodiment, as illustrated in FIG. 5, for example, the cap assembly 200 includes one mark 260 and two sub marks 270. For example, the sub mark 270 may include a first sub mark 270a and a second sub mark 270b formed spaced apart from each other. For example, the sub mark 270 and the mark 260 may be formed such that a side of the sub mark 270 and a side of the mark 260 are in contact with the boundary line. In an embodiment, a side of the sub mark 270 and a side of the mark 260 may not be connected at the boundary line but may be disposed adjacent to the boundary line. That is, a portion of a side of the mark 260 may meet diagonally with a portion of a side of the first sub mark 270a. In an embodiment, another portion of a side of the mark 260 may meet diagonally with a portion of a side of the second sub mark 270b.

In an embodiment, for example, the cap assembly 200 includes two marks 260 and one sub mark 270. For example, the marks 260 include a first mark (not shown) and a second mark (not shown) formed spaced apart from each other. For example, the sub mark 270 and the mark 260 may be formed such that a side of the sub mark 270 and a side of the mark 260 are in contact with the boundary line. In an embodiment, a side of the sub mark 270 and a side of the mark 260 may not be connected at the boundary line but may be disposed adjacent to the boundary line. That is, a portion of a side of the sub mark 270 may meet diagonally with a portion of a side of the first mark. In an embodiment, another portion of a side of the sub mark 270 may meet diagonally with a portion of a side of the second mark.

In an embodiment, for example, the cap assembly 200 may include a plurality of marks 260 and a plurality of sub marks 270. In this case, the plurality of marks 260 and the plurality of sub marks 270 may be alternately arranged. In an embodiment, the plurality of marks 260 and the plurality of sub marks 270 may be disposed such that some are connected, and others are alternately arranged. In an embodiment, the plurality of marks 260 and the plurality of sub marks 270 may be disposed such that all of the plurality of marks 260 and the plurality of sub marks 270 are connected to each other.

If the mark 260 and the sub mark 270 are disposed to be misaligned, the cap assembly 200 may provide a guide that indicates whether rotation and/or a crack has occurred in the cap assembly 200 through whether the mark 260 and the sub mark 270 are connected. For example, if the vent 220 and the cap down 230 rotate relative to each other, the mark 260 and the sub mark 270 that were disposed to be misaligned relative to each other may partially overlap and/or may be connected to each other.

The cap assembly 200 may provide a guide that indicates that torque is generated between the vent 220 and the cap down 230 and/or a crack is generated in the welded portion through the positional relationship of the mark 260 and the sub mark 270. Additionally, the cap assembly 200 may provide a guide that indicates the detection of a minute angle rotation between the vent 220 and the cap down 230 due to minute torque.

In an embodiment, although not illustrated in FIGS. 4 and 5, the cap assembly 200 may have different sizes of the mark 260 and the sub mark 270 to provide a guide that indicates the degree of rotation between the vent 220 and the cap down 230.

For example, the sub mark 270 may be in contact with the boundary line over a relatively large area, and the mark 260 may be in contact with the boundary line over a relatively small area. In this case, in a normal state in which the vent 220 and the cap down 230 are not rotated, the mark 260 may be formed to be in contact with the boundary line while pointing to a side of the area of the sub mark 270.

If the vent 220 and the cap down 230 are rotated, and the degree of rotation is small, the mark 260 may move a relatively short distance from a side of the area of the sub mark 270 to point to the sub mark 270. If the vent 220 and the cap down 230 are rotated, and the degree of rotation is large, the mark 260 may move a relatively long distance from a side of the area of the sub mark 270 to point to the sub mark 270. In this case, in order to accurately measure the degree of torque generation, the sub mark 270 may include a scale.

In this way, as the sub mark 270 acts as a scale and the mark 260 acts as a needle, the cap assembly 200 may provide a guide that indicates not only whether torque is being generated, but also a degree of torque generation.

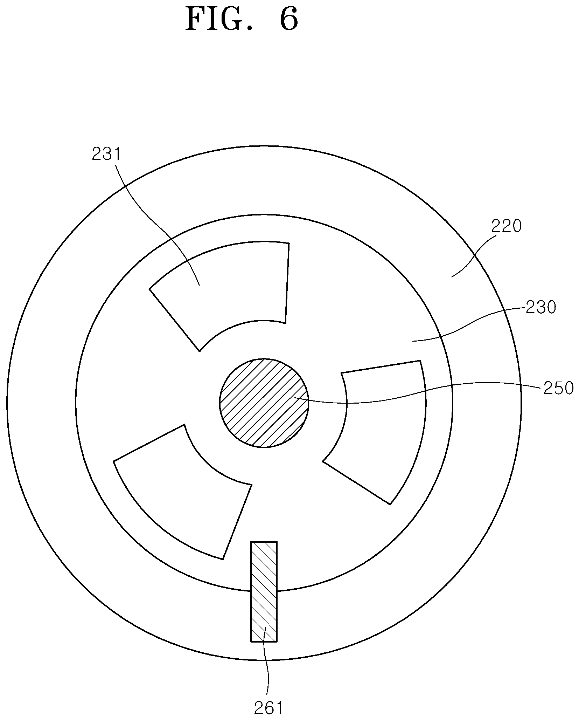

FIG. 6 is a diagram schematically illustrating a lower surface of the cap assembly according to an embodiment of the present invention.

In FIG. 6, "200" represents a cap assembly according to an embodiment of the present invention (e.g., including the cap assembly 200 described in FIGS. 1 to 5).

A mark 260 according to an embodiment of the present invention may be formed by an adhesive tape 261 connecting a surface of the vent 220 with the another surface of the cap down 230.

Referring to FIGS. 3 to 5, it has been described that the mark 260 and/or the sub mark 270 may be formed through a sticker. For example, the mark 260 may include a sticker attached to the another surface of the cap down 230, and the sub mark 270 may include a sticker attached to surface of the vent 220.

In an embodiment, as illustrated in FIG. 6, the mark 260 includes the adhesive tape 261 attached to the surface of the vent 220 and the another surface of the cap down 230. In an embodiment, the adhesive tape 261 includes one sticker extending from the cap down 230 toward the vent 220 rather than two stickers that are separated at the boundary between the cap down 230 and the vent 220.

In this way, the mark 260 includes the adhesive tape 261 in which one side is attached to the cap down 230 and extends from the cap down 230 toward the vent 220 and another side is attached to the vent 220.

The cap assembly 200 may provide a guide that indicates whether rotation and/or a crack has occurred in the cap assembly 200 through whether the adhesive tape 261 is crumpled or broken. For example, if the vent 220 and the cap down 230 rotate relative to each other, at least a portion of the adhesive tape 261 is crumpled or a portion of the adhesive tape 261 is broken.

The cap assembly 200 may provide a guide that indicates that torque is generated between the vent 220 and the cap down 230 and/or a crack is generated in the welded portion through the adhesive tape.

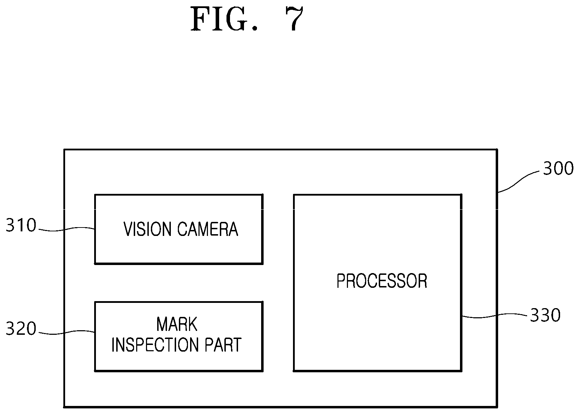

FIG. 7 is a block diagram illustrating components of a secondary battery inspection device according to an embodiment of the present invention.

In FIG. 7, "300" represents a secondary battery inspection device according to one embodiment of the present invention.

The secondary battery inspection device 300 is a device for inspecting the cap assembly 200 described in FIGS. 1 to 6 and/or the secondary battery 100 including the cap assembly 200. In an embodiment, for example, the secondary battery inspection device 300 is a device for inspecting whether rotation has occurred inside the cap assembly 200. In an embodiment, for example, the secondary battery inspection device 300 is a device for inspecting whether a crack has occurred inside the cap assembly 200.

In an embodiment, the secondary battery inspection device 300 includes a vision camera 310 that obtains an image of a cap assembly 200 including a cap down 230, a vent 220 located on a surface of the cap down 230, and a mark 260 formed on another surface of the cap down 230, and a processor 330 that extracts the mark 260 from an image and inspects the cap assembly 200 using the extracted mark 260.

The vision camera 310 may be any kind of camera that acquires images of objects through vision. The vision camera 310 acquires an image of the cap assembly 200. For example, the vision camera 310 acquires an image of a lower surface of the cap assembly 200.

The processor 330 controls all or part of the components included in the secondary battery inspection device 300. In an embodiment, for example, the processor 330 includes a central processing unit (CPU) or the like.

The processor 330 extracts the mark 260 and/or a sub mark 270 from the image of the cap assembly 200. The processor 330 determines a position of the extracted mark 260 and/or sub mark 270. The processor 330 determines whether rotation has occurred in the cap assembly 200 from the position of the mark 260 and/or the sub mark 270.

For example, the processor 330 compares the position of the mark 260 and/or the sub mark 270 with pre-stored data. The processor 330 determines that rotation has occurred in the cap assembly 200 if the position of the mark 260 and/or the sub mark 270 are different from the pre-stored data and determines that rotation has not occurred in the cap assembly 200 if the position of the mark 260 and/or the sub mark 270 are the same as the pre-stored data.

The pre-stored data is data indicating the position of the mark 260 and/or the sub mark 270 if rotation has not occurred in the cap assembly 200. The pre-stored data may be stored in the form of, for example, an image, coordinates, or the like.

For example, the processor 330 compares a relationship between the mark 260 and the sub mark 270. If the mark 260 and the sub mark 270 are connected if rotation has not occurred in the cap assembly 200, the processor 330 determines that rotation has occurred in the cap assembly 200 if the marks 260 and the sub mark 270 are misaligned. If the mark 260 and the sub mark 270 are misaligned if rotation has not occurred in the cap assembly 200, the processor 330 determines that rotation has occurred in the cap assembly 200 if at least portions of the mark 260 and the sub mark 270 are connected.

A method by which the processor 330 determines whether the rotation of the cap assembly 200 occurs using the mark 260 is not limited to the above. The processor 330 may determine whether the cap assembly 200 rotates based on the various examples illustrated in FIGS. 3 to 6, or combinations thereof.

If it is determined that the rotation has not occurred in the cap assembly 200, the processor 330 outputs the inspection result of the cap assembly 200 as a good product. If it is determined that the rotation has occurred in the cap assembly 200, the processor 330 outputs the inspection result of the cap assembly 200 as a defective product.

There may be an error in the mark 260 itself formed in the cap assembly 200. For example, even though the mark 260 and the sub mark 270 are connected if the cap assembly 200 is not rotated, the mark 260 may be formed so as not to be connected to the sub mark 270.

In an embodiment, the secondary battery inspection device 300 may further include a mark inspection part 320 that inspects whether the mark 260 is formed at a certain (e.g., preset) position.

The mark inspection part 320 inspects whether the mark 260 and/or the sub mark 270 is formed in response to a pre-stored input value. For example, the mark inspection part 320 inspects whether the mark 260 and/or the sub mark 270 extracted by the processor 330 has been formed in response to the pre-stored input value. In this case, the pre-stored input value is data indicating the position and/or placement relationship of the mark 260 and/or the sub mark 270 in the cap assembly 200 in which rotation has not occurred.

If it is determined that the mark 260 and/or the sub mark 270 is formed at the preset position by the mark inspection part 320, the processor 330 performs an inspection on the cap assembly 200 and/or the secondary battery 100. If it is determined that the mark 260 and/or the sub mark 270 is not formed at the preset position, the processor 330 may determine the corresponding cap assembly 200 and/or secondary battery 100 as defective products. In an embodiment, if it is determined that the mark 260 and/or the sub mark 270 is not formed at the preset position, the processor 330 may perform an inspection after changing the pre-stored data only for the corresponding cap assembly 200 and/or secondary battery 100. In this case, the pre-stored data after the change includes data for the position of the mark 260 and/or the sub mark 270 that is not formed at the preset position.

Through this configuration, the secondary battery inspection device 300 according to one or more embodiments of the present invention may perform a full inspection without destroying the cap assembly 200 and/or the secondary battery 100 including the cap assembly 200.

According to one or more embodiments of the present invention, a non-destructive full inspection is provided for a cap assembly and/or a finished secondary battery product.

According to one or more embodiments of the present invention, a cap assembly and/or secondary battery with improved safety and/or reliability is provided.

According to one or more embodiments of the present invention, a cap assembly and/or secondary battery can be inspected with high accuracy in a short time.

However, aspects and effects obtained through the present invention are not limited to the above-described aspects and effects, and other aspects and technical effects that are not mentioned will be clearly understood by those skilled in the art from the description of the invention provided.

Although the present invention has been described above by some example embodiments and drawings, the present invention is not limited thereto, and various modifications and variations can be made by those of ordinary skill in the art within the technical scope of the present invention as defined by the appended claims.

## Claims

1. A cap assembly (200) comprising:
a cap down (230);
a vent (220) located on a surface of the cap down (230); and
a mark (260) located on another surface of the cap down (230).

2. The cap assembly (200) as claimed in claim 1, wherein the cap assembly (200) comprises a sub mark (270) located on a surface of the vent (220).

3. The cap assembly (200) as claimed in claim 2, wherein the sub mark (270) is located on a surface of the vent (220) facing the cap down (230).

4. The cap assembly (200) as claimed in claim 2 or 3, wherein the sub mark (270) is located so as to be connected to the mark (260).

5. The cap assembly (200) as claimed in any one of claim 2 to 4, wherein the sub mark (270) is connected to the mark (260) to form an "I" shape.

6. The cap assembly (200) as claimed in any one of claims 2 to 5, wherein the sub mark (270) is located to be alternately arranged with the mark (260).

7. The cap assembly (200) as claimed in any one of the preceding claims, wherein the mark (260) comprises an intaglio on the another surface of the cap down (230).

8. The cap assembly (200) as claimed in claim 6, wherein the intaglio is formed by a laser.

9. The cap assembly (200) as claimed in claim 6, wherein the intaglio is formed by a punch.

10. The cap assembly (200) as claimed in any one of the preceding claims, wherein the mark (260) comprises a paint printed on the another surface of the cap down (230).

11. The cap assembly (200) as claimed in any one of the preceding claims, wherein the mark (260) comprises an adhesive tape (261).

12. The cap assembly (200) as claimed in claim 11, wherein the adhesive tape (261) is connecting a surface of the vent (220) with the another surface of the cap down (230).

13. A secondary battery (100) comprising:
a case (50) in which an electrode assembly (40) is accommodated; and
a cap assembly (200) according to any one of claims 1 to 12, coupled to an opening of the case (50) to seal the case (50).

14. A secondary battery inspection device (300) comprising:
a vision camera (310) configured to acquire an image of a cap assembly (200) according to any one of claims 1 to 12; and
a processor (330) configured to extract the mark (260) from the image and inspect the cap assembly (200) using the extracted mark (260).

15. The secondary battery inspection device (300) as claimed in claim 14, further comprising a mark inspection part (320) configured to inspect whether the mark (260) is formed at a certain position.
